# EUROPÄISCHE PATENTSCHRIFT

(11) **EP 2 332 834 B1**
(45) Veröffentlichungstag und Bekanntmachung des Hinweises auf die Patenterteilung: **16.09.2015**
(21) Anmeldenummer: 10193820.7
(22) Anmeldetag: 06.12.2010
(51) Int. Cl.: B64D 27/02, B64D 27/14, B64D 27/26

(54) **Vorrichtung zur Aufhängung eines Strahltriebwerks an einer Stützstruktur**
Device for mounting a turbojet engine on a support structure
Dispositif de suspension d'un moteur à réaction sur une structure d'appui

(30) Priorität: 11.12.2009 DE 102009054568
(43) Veröffentlichungstag der Anmeldung: 15.06.2011
(73) Patentinhaber: Rolls-Royce Deutschland Ltd & Co KG, 15827 Blankenfelde-Mahlow (DE)
(72) Erfinder: Lisiewicz, Stephan, 12307 Berlin (DE); Todorovic, Predrag, 10437 Berlin (DE)
(74) Vertreter: Kronthaler, Wolfgang N.K.

(56) Entgegenhaltungen:
- EP-A2- 1 627 812
- US-A- 3 020 004
- US-A- 5 443 229
- US-A- 6 131 850

## Beschreibung

Die Erfindung betrifft eine Vorrichtung zur Aufhängung eines Strahltriebwerks an einer Stützstruktur.

Bei rumpfmontierten Propfan-Triebwerken ist auf einen ausreichend großen Abstand der Propellerebene zur Verkleidung (Pylon) des Schubfeldträgers zu achten, um die Strömung des Propellers nicht zu beeinträchtigen. Dadurch kommt es zu einem großen Überhangsmoment, das abgetragen werden muss. Das Überhangsmoment führt zu einer Verformung des Strahltriebwerks, was eine Veränderung der Spalte im Strahltriebwerk zur Folge hat.

Es ergibt sich der Nachteil eines weit überkragenden Aufhängungsbalkens, eines vergrößerten Schubfeldträgers im Pylon und einer verstärkten Gehäusestruktur, mit der die entstehenden Lasten durch das Kerntriebwerk geführt werden, um diese an geeigneter Stelle in den Pylon einzubringen.

In der US 4,854,525 ist ein System zur Befestigung eines Strahltriebwerks offenbart, bei dem ein Längsbalken die Kräfte und Momente mittels spezieller Befestigungsmittel von dem Strahltriebwerk auf eine Stützstruktur überträgt. Die Stützstruktur ist am Flugzeugrumpf befestigt. Die Befestigungsmittel umfassen eine hintere und eine vordere Befestigung am Strahltriebwerk und drei Befestigungen an der Stützstruktur. Des Weiteren ist eine Schubstange der Stützstruktur. Des Weiteren ist eine Schubstange winklig gegenüber dem Längsbalken angeordnet, die den Schub vom Strahltriebwerk auf den Längsbalken überträgt. Der Längsbalken, die Stützstruktur und das Triebwerksgehäuse müssen jedoch sehr massiv sein, um alle Kräfte und Momente aufnehmen zu können.

Der NASA design report CR-180867 vom Dezember 1987 beschreibt einen Propfan ohne Ummantelung mit der Typenbezeichnung GE36. Hier ist das Strahltriebwerk mit einer vorderen Aufhängung und zwei hinteren Aufhängungen an einem Balken befestigt, der mit einer Stützstruktur verbunden ist. Beim diesem Propfan ohne Ummantelung (unducted fan = UDF) ist der Balken sehr massiv ausgeführt, trotz der Nähe zum Schubfeldträger. Durch die Lärmanforderungen an ein modernes Strahltriebwerk muss der Abstand zwischen der Propellerebene und dem Pylon noch vergrößert werden, wodurch das Überhangsmoment vergrößert wird und der Balken deswegen in seinen Abmessungen stark zunimmt. Eine derartige Ausführung ist in der US 5,443,229 A näher beschrieben.

Die US 4,821,980 beschreibt einen Balken, der ein Strahltriebwerk mit einer Stützstruktur verbindet und die Kräfte und Momente von dem Strahltriebwerk auf die Stützstruktur überträgt. Der Balken ist mit vier Gelenken an seiner Oberseite und weiteren Gelenken an seiner Unterseite versehen. An den Gelenken soll eine D-förmige Verschalung zur Aufnahme des Strahltriebwerks befestigt werden. Auch hier sind der Balken und die Stützstruktur sehr massiv ausgeführt.

In der EP 1 627 812 A2 ist eine Aufhängungsvorrichtung für ein Triebwerk beschrieben, mit der das Triebwerk im Bereich einer vorderen Aufhängung mit einem Pylon verbunden ist. Zusätzlich hierzu kann das Triebwerk heckwärts der vorderen Aufhängung mit einem hinteren Verbindungspunkt verbunden werden.

Aus der US 3,020,004 A ist ein Triebwerk bekannt, das an einem Flugzeugflügel aufgehängt ist. Zur Anbindung des Triebwerks an eine Stützstruktur des Flügels sind zwei Streben vorgesehen, die an einem der Stützstruktur abgewandten Ende mit einem ringförmigen Rahmen verbunden sind. In bezüglich der Stützstruktur abgewandter Richtung sind mit dem ringförmigen Rahmen Streben verbunden, die in einem vorderen Bereich an einem Triebwerksgehäuse angeordnet sind. Heckwärts von dem ringförmigen Rahmen sind Streben angeordnet, die andernends mit dem Triebwerk verbunden sind.

Der Erfindung liegt daher die Aufgabe zu Grunde eine Vorrichtung zur Aufhängung eines Strahltriebwerks zu schaffen, die eine Gewichtseinsparung und eine Verringerung der Verformung des Strahltriebwerks ermöglicht und mit der eine Störung einer Propellerströmung reduziert ist. Diese Aufgabe wird erfindungsgemäß mit einer Vorrichtung zur Aufhängung eines Strahltriebwerks nach Anspruch 1 und der Verwendung einer solchen Vorrichtung nach den Ansprüchen 8 und 9 gelöst.

Vorteilhafte Ausgestaltungen der Erfindung sind in den Unteransprüchen enthalten.

Erfindungsgemäß besteht die Lösung der Aufgabe in einer Vorrichtung zur Aufhängung eines Strahltriebwerks an einer Stützstruktur, die an einem Flugzeugrumpf angebracht ist, mit einem Aufhängungsbalken, an dem mittels einer vorderen Aufhängung das Triebwerksgehäuse angebracht ist und der eine hintere Aufhängung und mindestens eine Schubstange aufweist, die winklig gegenüber dem Aufhängungsbalken angeordnet ist. Die hintere Aufhängung und die Schubstange sind über ein Leichtbausystem mit dem Triebwerksgehäuse verbunden. Das Leichtbausystem kann auch integral ausgeführt werden.

Das Leichtbausystem hat den Vorteil, dass an der Stützstruktur, am Aufhängungsbalken und am Kerntriebwerk Gewicht eingespart werden kann. Dadurch kann der Pylon schmaler ausgeführt und mit besseren aerodynamischen Eigenschaften versehen werden. Beim Triebwerk kann speziell bei den heißen Triebwerksbauteilen eine Materialeinsparung ermöglicht werden.

Dadurch, dass das Leichtbausystem in einem von der hinteren Aufhängung aus nach hinten gerichteten Abstand mit dem Triebwerksgehäuse verbunden ist, ist ein größerer Abstand zwischen dem Propeller und dem Pylon möglich. Es ergeben sich eine geringere Störung der Propellerströmung und somit eine verringerte Lärmentwicklung. Das Kerntriebwerk erfährt weniger Belastungen und Verformungen.

Insbesondere ist das Leichtbausystem durch ein in Umfangsrichtung um das Triebwerksgehäuse angeordnetes Fachwerk gebildet. Ein Fachwerk ist eine besonders stabile und sichere Form eines Leichtbausystems und ist zur Übertragung der Kräfte und Momente gut geeignet.

In einer bevorzugten Ausgestaltung der Erfindung weist das Fachwerk einen um das Triebwerksgehäuse verlaufenden und im Bereich der Stützstruktur angeordneten Aufhängungsring und eine Vielzahl von um das Triebwerksgehäuse verlaufenden Streben auf, die das Triebwerksgehäuse mit dem Aufhängungsring verbinden, und an dem Aufhängungsring sind die hintere Aufhängung und die Schubstangen angebracht. Diese spezielle Ausführungsform bewirkt eine optimale Gewichtseinsparung und Übertragung der Kräfte und Momente.

Vorzugsweise ist die Schubstange näher an der vorderen Aufhängung als an der hinteren Aufhängung mit dem Aufhängungsbalken verbunden. Dadurch ergibt sich eine geringe Neigung der Schubstangen, und die Schublasten können besser in den Aufhängungsbalken eingeleitet werden.

In einer besonderen Ausgestaltung der Erfindung sind durch die vordere Aufhängung Lasten in z-Richtung und in y-Richtung, durch die hintere Aufhängung Lasten in y-Richtung und z-Richtung sowie Drehmomente um die x-Achse und durch die Schubstange Lasten in x-Richtung und Biegemomente um die y-Achse und die z-Achse aufnehmbar. Diese Verteilung der auftretenden Lasten auf die vordere Aufhängung, die hintere Aufhängung und die Schubstange bewirken eine optimale Übertragung der Lasten vom Triebwerksgehäuse auf die den Aufhängungsbalken und damit auf die Stützstruktur.

Insbesondere sind zwei Schubstangen winklig zu einander angeordnet und verbinden beide den Aufhängungsring mit der Aufhängungsbalken. Durch den Einsatz der zwei Schubstangen werden die Lasten an zwei voneinander entfernten Stellen des Triebwerksgehäuses abgeführt und auf zwei Schubstangen verteilt.

Weiterhin ist die Stützstruktur aus einem Schubfeldträger gebildet, der in einem Pylon angeordnet ist. Der Schubfeldträger überträgt die Lasten von dem Aufhängungsbalken auf den Flugzeugrumpf. Der den Schubfeldträger umgebende Pylon ermöglicht eine aerodynamisch günstige Umströmung des Schubfeldträgers.

Eine vorteilhafte Verwendung der Vorrichtung ergibt sich bei einem Propfan-Triebwerk mit einer Anordnung mindestens eines Propellers hinter der Stützstruktur.

Eine alternative Verwendung der Vorrichtung ist bei einem Propfan-Triebwerk mit einer Anordnung mindestens eines Propellers vor der Stützstruktur gegeben.

Im Folgenden wird ein Ausführungsbeispiel der Erfindung anhand der einzigen Figur näher erläutert. Es zeigt:

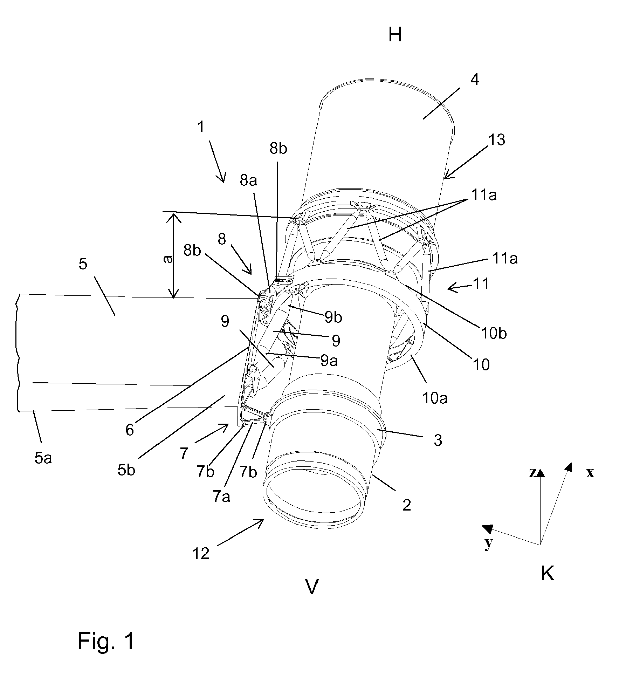

Fig. 1 eine erfindungsgemäße Vorrichtung an einer Stützstruktur und einem Triebwerksgehäuse.
Fig. 1 zeigt eine Vorrichtung 1 und eine aus einem Schubfeldträger gebildete Stützstruktur 5. Weiterhin zeigt

Fig. 1 ein Strahltriebwerk 12, bestehend aus den Komponenten Kerntriebwerk 2, Zwischengehäuse 3 und Getriebe 4 für nicht dargestellte Propeller. Das Strahltriebwerk 12 und dessen Komponenten sind von einem Triebwerksgehäuse 13 ummantelt.

Bei dem dargestellten Ausführungsbeispiel befinden sich die Propeller also hinter dem Schubfeldträger 5 (Pusher-Konfiguration). Die erfindungsgemäße Vorrichtung kann jedoch auch bei einer Anordnung der Propeller vor dem Schubfeldträger 5 (Puller-Konfiguration) eingesetzt werden.

Das Kerntriebwerk 2 und das Getriebe 4 grenzen aneinander an. Das Kerntriebwerk 2 zeigt in Fig. 1 nach vorne (V), während das Getriebe 4 nach hinten (H) zeigt. Das Zwischengehäuse 3 ist im vorderen Bereich (V) des Kerntriebwerks 2 angeordnet.

Der Schubfeldträger 5 (Stützstruktur) ist im Querschnitt rechteckig und mit einem ersten Ende 5a an einem nicht dargestellten Flugzeugrumpf befestigt. Das zweite Ende 5b des Schubfeldträgers 5 ist mit der Vorrichtung 1 verbunden.

Die Vorrichtung 1 umfasst einen Aufhängungsbalken 6, eine vordere Aufhängung 7, eine hintere Aufhängung 8, zwei Schubstangen 9 und ein Fachwerk 11.

Der Aufhängungsbalken 6 ist in Längsrichtung an dem zweiten Ende 5b des Schubfeldträgers 5 befestigt und kann nach vorne (V) über den Schubfeldträger 5 hinausragen.

Die vordere Aufhängung 7 verbindet den Aufhängungsbalken 6 mit dem Zwischengehäuse 3. Die vordere Aufhängung 7 wird durch zwei Stäbe 7a gebildet, die winklig zu einander angeordnet sind. Die Stäbe 7a sind mit einem gemeinsamen Gelenk 7b am Zwischengehäuse 3 und mit je einem Gelenk 7b am Aufhängungsbalken 6 angebracht.

Die hintere Aufhängung 8 verbindet den Aufhängungsbalken 6 mit dem Fachwerk 11. Die hintere Aufhängung 8 wird durch zwei Stäbe 8a, die auch Gelenkstangen sein können, gebildet, die symmetrisch in entgegen gesetzten Richtungen den Aufhängungsbalken 6 mit dem Umfang eines Aufhängungsrings 10 des Fachwerks 11 verbinden. Die Stäbe 8a sind an ihren Enden jeweils mit einem Gelenk 8b am Aufhängungsbalken 6 bzw. am Aufhängungsring 10 angebracht.

Die Schubstangen 9 sind mit ihren vorderen Enden 9a am Aufhängungsbalken 6 befestigt. Die Befestigung der Enden 9a der Schubstangen 9 am Aufhängungsbalken 6 befindet sich vorne (V) am Schubfeldträger 5 außerhalb des über den Schubfeldträger 5 hinaus ragenden Teils des Aufhängungsbalkens 6.

Die Schubstangen 9 sind spitzwinklig zu einander und zum Aufhängungsbalken 6 angeordnet. Die Schubstangen 9 weisen hintere Enden 9b auf, die symmetrisch zum Aufhängungsbalken 6 an einer Vorderseite 10a des Aufhängungsrings 10 des Fachwerks 11 angebracht sind.

Das Fachwerk 11 (Leichtbausystem) wird aus dem Aufhängungsring 10 und einer Vielzahl von Streben 11a zwischen einer Rückseite 10b des Aufhängungsrings 10 und dem Strahltriebwerk 12 gebildet. Der Aufhängungsring 10 verläuft hinten (H) am Schubfeldträger 5 um das Kerntriebwerk 2. Die Streben 11a sind in einem Abstand a von dem Schubfeldträger 5 am Strahltriebwerk 12 befestigt. Die Streben 11a sind winklig zu einander angeordnet und bilden eine um das Strahltriebwerk 12 verlaufende Zickzacklinie.

Im Betrieb überträgt das Fachwerk 11 die hinten (H) am Strahltriebwerk 12 entstehenden Kräfte und Momente auf die hintere Aufhängung 8 und die Schubstangen 9. Die vorne (V) am Strahltriebwerk 12 entstehenden Kräfte werden von der vorderen Aufhängung 7 aufgenommen.

Insbesondere nimmt die hintere Aufhängung 8 Kräfte in Richtung der x-Achse, der y-Achse und der z-Achse entsprechend dem Koordinatensystem K und das Drehmoment um die x-Achse auf. Die Schubstangen 9 nehmen Kräfte in x-Richtung und Biegemomente um die y-Achse und die z-Achse entsprechend dem Koordinatensystem K auf. Die vordere Aufhängung 7 nimmt die Kräfte in Richtung der y-Achse und der z-Achse entsprechend dem Koordinatensystem K auf.

Die Kräfte und Momente werden von der vorderen Aufhängung 7, der hinteren Aufhängung 8 und den Schubstangen 9 auf den Aufhängungsbalken 6 und von dort auf den Schubfeldträger 5 übertragen, der die Kräfte und Momente zum nicht dargestellten Flugzeugrumpf weiterleitet.

### Bezugszeichenliste

- 1: Vorrichtung
- 2: Kerntriebwerk
- 3: Zwischengehäuse
- 4: Getriebe
- 5: Stützstruktur (Schubfeldträger)
- 5a: Erstes Ende
- 5b: Zweites Ende
- 6: Aufhängungsbalken
- 7: Vordere Aufhängung
- 7a: Stab
- 7b: Gelenk
- 8: Hintere Aufhängung
- 8a: Stab
- 8b: Gelenk
- 9: Schubstange
- 9a: Vorderes Ende
- 9b: Hinteres Ende
- 10: Aufhängungsring
- 10a: Vorderseite
- 10b: Rückseite
- 11: Fachwerk
- 11a: Strebe
- 12: Strahltriebwerk
- 13: Triebwerkgehäuse

- a: Abstand
- K: Koordinatensystem
- V: Vorne
- H: Hinten

## Patentansprüche

1. Vorrichtung (1) zur Aufhängung eines Strahltriebwerks (12) an einer Stützstruktur (5), die an einem Flugzeugrumpf angebracht ist, mit einem in Längsrichtung an der Stützstruktur (5) befestigbaren Aufhängungsbalken (6), an dem mittels einer vorderen Aufhängung (7) ein Triebwerksgehäuse (13) anbringbar ist und der eine hintere Aufhängung (8) und mindestens eine Schubstange (9) aufweist, die winklig gegenüber dem Aufhängungsbalken (6) angeordnet ist, wobei die mindestens eine Schubstange (9) mit dem Aufhängungsbalken (6) verbunden ist, **dadurch gekennzeichnet, dass** die hintere Aufhängung (8) und die Schubstange (9) über ein Leichtbausystem (11) mit einem Triebwerksgehäuse (13) verbindbar sind, wobei das Leichtbausystem (11) in einem von der hinteren Aufhängung (8) aus nach hinten gerichteten Abstand (a) mit einem Triebwerksgehäuse (13) verbindbar ist.

2. Vorrichtung (1) nach Anspruch 1, **dadurch gekennzeichnet, dass** das Leichtbausystem (11) durch ein in Umfangsrichtung um ein Triebwerksgehäuse (13) anordenbares Fachwerk (11) gebildet ist.

3. Vorrichtung (1) nach Anspruch 2, **dadurch gekennzeichnet, dass** das Fachwerk (11) einen um ein Triebwerksgehäuse (13) verlaufenden und im Bereich der Stützstruktur (5) angeordneten Aufhängungsring (10) und eine Vielzahl von um ein Triebwerksgehäuse (13) verlaufenden Streben (11a) aufweist, über die ein Triebwerksgehäuse (13) mit dem Aufhängungsring (10) verbindbar ist, und dass an dem Aufhängungsring (10) die hintere Aufhängung (8) und die Schubstange (9) angebracht sind.

4. Vorrichtung (1) nach einem der vorhergehenden Ansprüche, **dadurch gekennzeichnet, dass** die Schubstange (9) näher an der vorderen Aufhängung (7) als an der hinteren Aufhängung (8) mit dem Aufhängungsbalken (6) verbunden ist.

5. Vorrichtung (1) nach einem der Ansprüche 1 bis 4, **dadurch gekennzeichnet, dass** durch die vordere Aufhängung (7) Lasten in y-Richtung, und in z-Richtung, durch die hintere Aufhängung (8) Lasten in x-Richtung, y-Richtung und z-Richtung sowie Drehmomente um die x-Achse und durch die Schubstange (9) Lasten in x-Richtung und Biegemomente um die y-Achse und die z-Achse aufnehmbar sind.

6. Vorrichtung (1) nach einem der vorhergehenden Ansprüche, **dadurch gekennzeichnet, dass** zwei Schubstangen (9) winklig zu einander angeordnet sind und beide den Aufhängungsring (10) mit dem Aufhängungsbalken (6) verbinden.

7. Vorrichtung (1) nach einem der vorhergehenden Ansprüche, **dadurch gekennzeichnet, dass** die Stützstruktur (5) aus einem Schubfeldträger (5) gebildet ist, der in einem Pylon angeordnet ist.

8. Verwendung der Vorrichtung (1) nach einem der Ansprüche 1 bis 7 bei einem Propfan-Triebwerk mit einer Anordnung mindestens eines Propellers hinter der Stützstruktur (5).

9. Verwendung der Vorrichtung (1) nach einem der Ansprüche 1 bis 7 bei einem Propfan-Triebwerk mit einer Anordnung mindestens eines Propellers vor der Stützstruktur (5).

## Claims

1. Device (1) for mounting a turbojet engine (12) on a support structure (5), which is attached to an aircraft fuselage, comprising a suspension bar (6) which is attachable at the support structure (5) in the longitudinal direction and at which an engine shroud (13) can be attached by means of a front suspension (7), and that has a rear suspension (8) and at least one push rod (9) which is arranged in an angled manner with respect to the suspension bar (6), wherein the at least one push rod (9) is connected to the suspension bar (6), **characterized in that** the rear suspension (8) and the push rod (9) are connectable via a lightweight construction system (11) with an engine shroud (13), wherein the lightweight construction system (11) is connectable to the engine shroud (13) in a distance (a) that is directed backwards from the rear suspension (8).

2. Device (1) according to claim 1, **characterized in that** the lightweight construction system (11) is formed by a framework (11) that can be arranged in the circumferential direction about an engine shroud (13).

3. Device (1) according to claim 2, **characterized in that** the framework (11) comprises a suspension ring (10) that extends around an engine shroud (13) and that is arranged in the area of the support structure (5), as well as a plurality of struts (11a) that extend around an engine shroud (13) and via which an engine shroud (13) is connectable to the suspension ring (10), and **in that** the rear suspension (8) and the push rod (9) are attached to the suspension ring (10).

4. Device (1) according to one of the preceding claims, **characterized in that** the push rod (9) is connected to the suspension bar (6) closer to the front suspension (7) than to the rear suspension (8).

5. Device (1) according to one of the claims 1 to 4, **characterized in that** through the front suspension (7) loads in the y-direction and in the z-direction can be taken, through the rear suspension (8) loads in the x-direction, y-direction and z-direction as well as torques around the x-axis can be taken, and through the push rod (9) loads in the x-direction and bending moments around the y-axis and the z-axis can be taken.

6. Device (1) according to one of the preceding claims, **characterized in that** two push rods (9) are arranged in an angled manner with respect to each other and **in that** both connect the suspension ring (10) to the suspension bar (6).

7. Device (1) according to one of the preceding claims, **characterized in that** the support structure (5) is formed by a thrust field carrier (5), which is arranged inside a pylon.

8. Use of the device (1) according to one of the claims 1 to 7 in a propfan engine with at least one propeller being arranged behind the support structure (5).

9. Use of the device (1) according to one of the claims 1 to 7 in a propfan engine with at least one propeller being arranged in front of the support structure (5).

## Revendications

1. Dispositif (1) pour la suspension d'un moteur à réaction (12) à une structure de soutien (5) montée sur un fuselage d'avion, avec une barre de suspension (6), qui peut être fixée à la structure de soutien (5) en direction longitudinale, sur laquelle un boîtier de réacteur (13) peut être monté à l'aide d'une suspension frontale (7) et qui présente une suspension arrière (8) ainsi qu'au moins une tige de poussée (9) disposée angulairement par rapport à la barre de suspension (6), ladite au moins une tige de poussée (9) étant reliée à la suspension (6), **caractérisé en ce que** la suspension arrière (8) et la tige de poussée (9) peuvent être reliées par un système de construction légère (11) avec un boîtier de réacteur (13), le système de construction légère (11) pouvant être relié avec un boîtier de réacteur (13) à une distance (a) dirigée vers l'arrière depuis la suspension arrière (8).

2. Dispositif (1) selon la revendication 1, **caractérisé en ce que** le système de construction légère (11) est formé par un treillis (11) pouvant être disposé dans la direction circonférentielle autour du boîtier de réacteur (13).

3. Dispositif (1) selon la revendication 2, **caractérisé en ce que** le treillis (11) comporte un anneau de suspension (10) disposé autour d'un boîtier de réacteur (13) dans la zone de la structure de soutien (5) ainsi qu'une multitude de barres (11a) autour du boîtier de réacteur (13) pouvant relier ledit boîtier de réacteur (13) à l'anneau de suspension (10), et que la suspension arrière (8) ainsi que la tige de poussée (9) sont montées sur l'anneau de suspension (10).

4. Dispositif (1) selon l'une des revendications précédentes, **caractérisé en ce que** la tige de poussée (9) reliée à la barre de suspension (6) est positionnée plus près de la suspension frontale (7) que de la suspension arrière (8).

5. Dispositif (1) selon l'une des revendications 1 à 4, **caractérisé en ce que** grâce à la suspension frontale (7), des charges dans la direction y, des charges dans la direction z ; grâce à la suspension arrière (8), des charges dans les direction x, y et z ainsi que des couples de rotation autour de l'axe des x ; et grâce à la tige de poussée (9), des charges dans la direction x et des couples de flexion peuvent être disposés autour de l'axe des y et de l'axe des z.

6. Dispositif (1) selon l'une des revendications précédentes, **caractérisé en ce que** deux tiges de poussée (9) sont disposées angulairement l'une par rapport à l'autre en reliant toutes deux l'anneau de suspension (10) à la barre de suspension (6).

7. Dispositif (1) selon l'une des revendications précédentes, **caractérisé en ce que** la structure de soutien (5) est formée par un panneau de cisaillement (5) dans lequel est disposé un pylône.

8. Utilisation du dispositif (1) selon l'une des revendications 1 à 7 sur un moteur à Propfan avec l'assemblage d'au moins une hélice à l'arrière de la structure de soutien (5).

9. Utilisation du dispositif (1) selon l'une des revendications 1 à 7 sur un moteur à Propfan avec l'assemblage d'au moins une hélice à l'avant de la structure de soutien (5).
